# EUROPÄISCHE PATENTSCHRIFT

(11) **EP 3 594 169 B1**
(45) Veröffentlichungstag und Bekanntmachung des Hinweises auf die Patenterteilung: **24.03.2021**
(21) Anmeldenummer: 18183441.7
(22) Anmeldetag: 13.07.2018
(51) Int. Cl.: B66C 13/56

(54) **FAHRZEUG MIT EINEM KRAN UND EINER KRANSTEUERUNG**
VEHICLE WITH A CRANE AND A CRANE CONTROL
VEHICULE AVEC UNE GRUE ET UNE COMMANDE DE GRUE

(43) Veröffentlichungstag der Anmeldung: 15.01.2020
(73) Patentinhaber: EPSILON Kran GmbH., 5020 Salzburg (AT)
(72) Erfinder: SCHÖRGHOFER, Simon, 5412 Puch bei Hallein (AT); STEINDL, Johannes, 5061 Elsbethen (AT)
(74) Vertreter: Torggler & Hofinger Patentanwälte

(56) Entgegenhaltungen:
- EP-A1- 2 946 968
- WO-A2-2009/010818
- JP-U- H0 542 300

## Beschreibung

Die Erfindung betrifft ein Fahrzeug mit einem Kran mit den Merkmalen des Oberbegriffs des Anspruchs 1.

Gattungsgemäße Kransteuerungen mit einer durch einen Bediener bedienbaren Bedieneinheit, welche zur Steuerung von Arbeitsfunktionen des Krans ausgebildet ist sind im Stand der Technik bekannt. Mittels einer solchen Bedieneinheit sind Steuersignale an Aktuatoren des Krans eingebbar, wobei zur Anbringung der Bedieneinheit in einer Führerkabine des Fahrzeugs eine Montagevorrichtung vorgesehen ist und zur Lagerung der Bedieneinheit eine Lagervorrichtung für die Bedieneinheit vorgesehen ist, welche die Bedieneinheit mit der Montagevorrichtung verbindet. Eine im Stand der Technik bekannte Bedieneinheit kann beispielsweise an einer Armlehne gelagert sein, welche an einem in einer Führerkabine eines Fahrzeugs angeordneten Beifahrersitz montiert ist.

Der Bediener des Krans ist üblicher Weise auch der Lenker des Fahrzeugs, auf welchem der Kran montiert ist und durch welches der Kran zum Einsatzort gefahren wird. Zur Bedienung des Krans, welche über die Bedieneinheit erfolgt, muss sich bei im Stand der Technik bekannten, in der Führerkabine angeordneten Bedieneinheiten der Bediener innerhalb der Kabine zur der Bedieneinheit bewegen, beispielsweise indem er sich von einem Fahrersitz zum Beifahrersitz bewegt, an dem eine stationär montierte Bedieneinheit angeordnet ist. Dadurch setzen Rangierbewegungen des Fahrzeugs und eine Bedienung des Krans, ggf. umfassend eine Betätigung von Abstützungen, entsprechende Positionswechsel des Bedieners innerhalb der Führerkabine voraus. Dies ist mit erhöhtem Zeitaufwand und geringem Komfort verbunden.

Aus der Druckschrift WO 2009/010818 A2 ist ein Fahrzeug mit einem Kran und einer Kransteuerung bekannt, das die Merkmale des Oberbegriffs des Anspruchs 1 offenbart.

Aufgabe der Erfindung ist die Bereitstellung eines gattungsgemäßen Fahrzeugs mit einem Kran und einer Kransteuerung, bei welchem die oben diskutierten Probleme vermieden werden.

Diese Aufgabe wird durch ein Fahrzeug mit den Merkmalen des Anspruchs 1 gelöst. Vorteilhafte Ausführungsformen der Erfindung sind in den abhängigen Ansprüchen definiert.

Erfindungsgemäß ist vorgesehen, dass die Lagervorrichtung für die Bedieneinheit zwischen zumindest zwei Stellungen begrenzt bewegbar gelagert ist, von denen eine Stellung als Arbeitsstellung ausgebildet ist, in welcher sich die Bedieneinheit zwischen einer Lenkvorrichtung des Fahrzeugs und einem Fahrersitz befindet und von denen eine andere Stellung als Lagerstellung ausgebildet ist, in welcher die Bedieneinheit von der Lenkvorrichtung des Fahrzeugs weg bewegt ist. Dadurch kann der Bediener des Krans eine Bedienung des Krans vornehmen, ohne dass dieser den Fahrersitz verlassen muss. Mit anderen Worten können dadurch das Lenken des Fahrzeugs und die Bedienung des Krans vom Fahrersitz vorgenommen werden. Durch das Wegfallen eines Positionswechsels des Bedieners innerhalb der Führerkabine kann der für einen Wechsel zwischen dem Lenken des Fahrzeugs und der Bedienung des Krans nötige Zeitaufwand verringert werden. Außerdem gestaltet sich dadurch die Bedienung des Krans komfortabler.

Die Bedieneinheit kann zum Verstauen derselben aus der Arbeitsstellung in der Lagerstellung bewegt werden, wo sie beispielsweise währen dem Lenken des Fahrzeugs angeordnet wird. Zur Bedienung des Krans kann die Bedieneinheit aus der Lagerstellung in die Arbeitsstellung bewegt werden.

Dabei kann eine Visualisierungseinheit zur Visualisierung einer Arbeitsumgebung des Krans vorgesehen sein. Durch die Visualisierungseinheit kann einem Bediener Einsicht in einen von der Führerkabine aus nicht direkt einsehbaren Bereich der Arbeitsumgebung des Krans ermöglicht werden.

Dabei kann vorteilhaft sein, wenn die Visualisierungseinheit als mobile Einheit ausgebildet ist, sodass sie unabhängig von der Bedieneinheit bewegbar ist und bevorzugt von einem Bediener am Körper tragbar ist. Die Visualisierungseinheit kann eine Virtual-Reality-Anzeigevorrichtung sein, welche vor den Augen des Benutzers angeordnet werden kann. Von der Visualisierungseinheit können einem Benutzer Bilder von beispielsweise am Kran angeordneten Kameras angezeigt werden. Eine Anzeige kann zumindest für Abschnitte der Arbeitsumgebung stereoskopisch erfolgen.

Es kann vorteilhaft sein, wenn die Lagervorrichtung relativ zur Montagevorrichtung verschwenkbar und/oder verschiebbar an der Montagevorrichtung angeordnet ist. Dadurch kann eine geführte Bewegung zwischen der Montagevorrichtung und der Lagervorrichtung ermöglicht werden. Die Lagervorrichtung kann relativ zur Montagevorrichtung begrenzt verschwenkbar und/oder begrenzt verschiebbar an der Montagevorrichtung angeordnet sein.

Dabei kann vorteilhaft sein, wenn die Lagervorrichtung wenigstens zwei relativ zueinander verschwenkbare Teile aufweist, von denen der eine Teil die Bedieneinheit lagert und die Montagevorrichtung am anderen Teil angeordnet ist, wobei die begrenzte Bewegung der Bedieneinheit zwischen der Arbeitsstellung und der Lagerstellung durch ein Verschwenken der zwei relativ zueinander verschwenkbaren Teile erfolgt. Zwischen Bedieneinheit und Montagevorrichtung können so wenigstens zwei relativ zueinander verschwenkbare Teile angeordnet sein.

Dabei kann weiter vorteilhaft sein, wenn die Lagervorrichtung wenigstens zwei relativ zueinander verfahrbare Teile aufweist, von denen der eine Teil die Bedieneinheit lagert und die Montagevorrichtung am anderen Teil angeordnet ist, wobei die begrenzte Bewegung der Bedieneinheit zwischen der Arbeitsstellung und der Lagerstellung durch ein vorzugsweise lineares Verfahren der zwei relativ zueinander verfahrbaren Teile erfolgt. Zwischen Bedieneinheit und Montagevorrichtung können so wenigstens zwei relativ zueinander verfahrbare Teile angeordnet sein.

Es kann eine Kombination aus einem Verschwenken und einem Verfahren der zwei relativ zueinander bewegbaren Teile der Lagervorrichtung vorgesehen sein.

Es kann vorteilhaft sein, wenn die Lagervorrichtung eine Verstellvorrichtung zur Anpassung einer Position der Bedieneinheit in der Arbeitsstellung relativ zu einem Bediener aufweist. Die Verstellvorrichtung kann ein weiteres Verschwenken und/oder Verfahren, ggf. unabhängig von den wenigstens zwei relativ zueinander bewegbaren Teilen der Lagervorrichtung, ermöglichen.

Wie eingangs erwähnt wurde, wird Schutz für ein Fahrzeug mit einem Kran und einer wie zuvor beschriebenen Kransteuerung begehrt. Dabei ist vorgesehen, dass die Montagevorrichtung der Kransteuerung in einer Führerkabine des Fahrzeugs montiert ist.

Vorzugsweise kann vorgesehen sein, dass in der Lagerstellung die Bedieneinheit neben einem Fahrersitz des Fahrzeugs angeordnet ist.

Es kann vorgesehen sein, dass in der Lagerstellung die Bedieneinheit oberhalb eines Fahrersitzes des Fahrzeugs angeordnet ist. Eine Anordnung der Bedieneinheit in der Lagerstellung unterhalb des Fahrersitzes ist ebenso denkbar.

Es kann vorgesehen sein, dass in der Lagerstellung die Bedieneinheit vor oder hinter einem Fahrersitz des Fahrzeugs angeordnet ist.

Ausführungsbeispiele der Erfindung werden anhand der Figuren diskutiert. Es zeigen:
- Fig. 1: ein Fahrzeug mit einem Kran,
- Fig. 2: eine bekannte Bedieneinheit in einer Führerkabine,
- Fig. 3: eine perspektivische Schnittdarstellung einer Führerkabine mit einer erfindungsgemäßen Kransteuerung,
- Fig. 4: eine perspektivische Schnittdarstellung einer Führerkabine mit einer weiteren erfindungsgemäßen Kransteuerung,
- Fig. 5: eine perspektivische Schnittdarstellung einer Führerkabine mit einer weiteren erfindungsgemäßen Kransteuerung,
- Fig. 6: eine Führerkabine mit einer weiteren erfindungsgemäßen Kransteuerung,
- Fig. 7: eine vorgeschlagene Kransteuerung mit einer Bedieneinheit in Lagerstellung der Lagervorrichtung und
- Fig. 8: die Bedieneinheit der Fig. 7 in einer Arbeitsstellung der Lagervorrichtung.

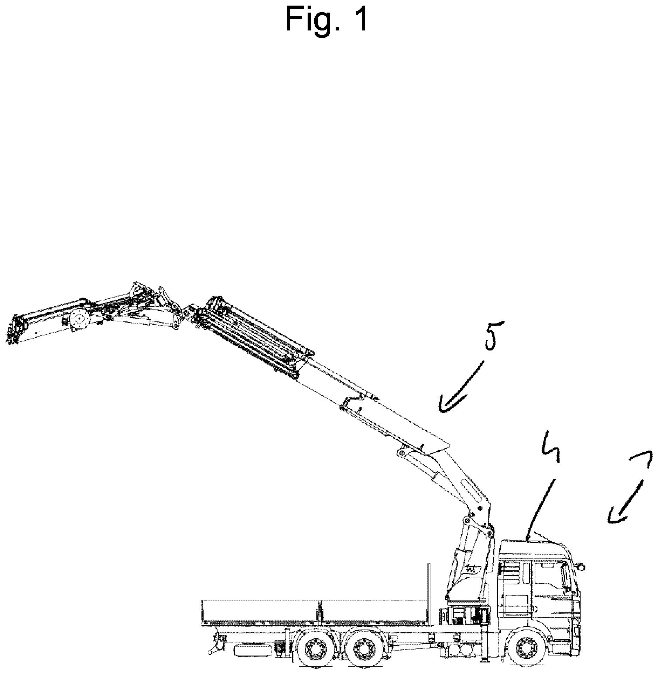

Fig. 1 zeigt ein Fahrzeug 1 mit einer Führerkabine 4 und einem am Fahrzeug 1 angeordneten Kran 5 in Form eines Ladekrans. In der Führerkabine 4 ist eine Bedieneinheit 2 zur Steuerung von Arbeitsfunktionen des Krans 5 angeordnet.

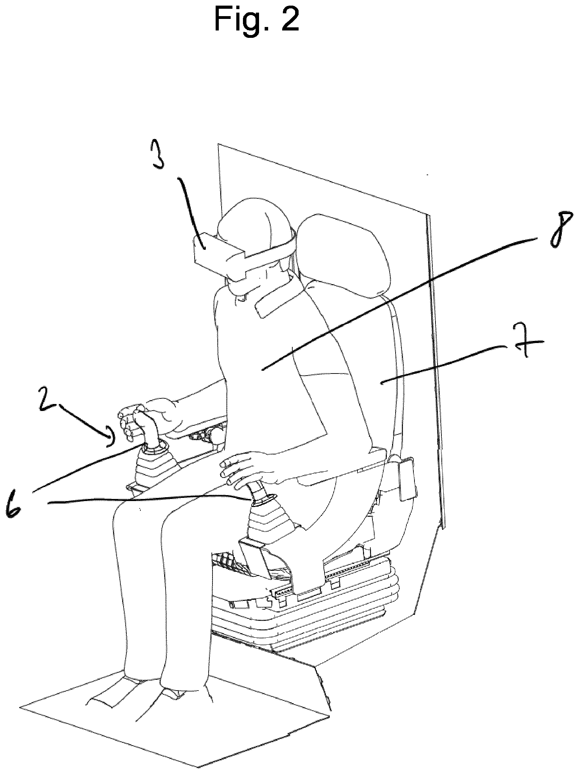

Fig. 2 zeigt eine Bedieneinheit 2 in der Führerkabine 4 des Fahrzeugs 1 gemäß dem Stand der Technik. Die Bedieneinheit 2 ist an einem Beifahrersitz 7 montiert und umfasst zwei Bedienhebel in Form von Joysticks 6, welche an vertikal schwenkbaren Armlehnen des Beifahrersitzes 7 gelagert sind. Wie dargestellt, trägt ein Bediener 8 eine Visualisierungseinheit 3 zur Visualisierung einer Arbeitsumgebung des Krans 5.

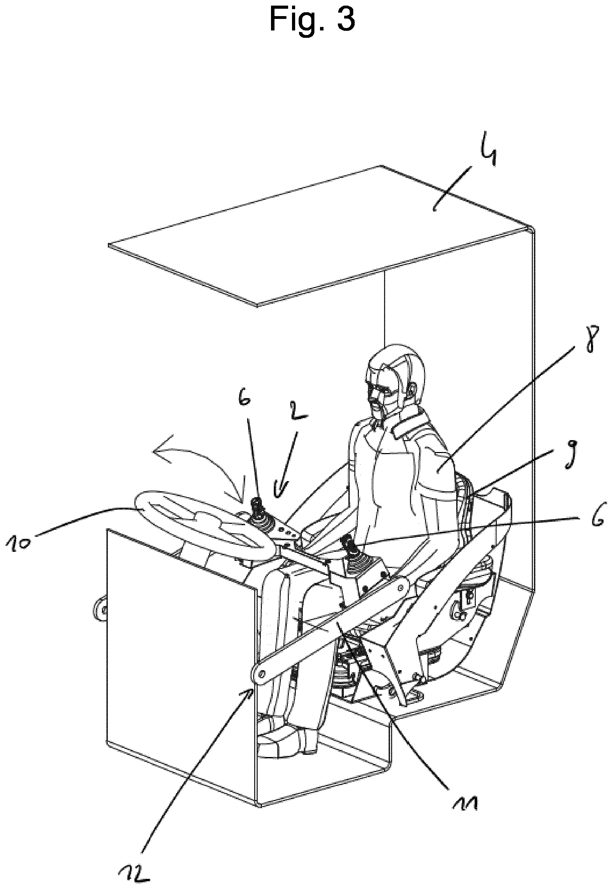

Fig. 3 zeigt eine perspektivische Schnittdarstellung einer Führerkabine 4 mit einer erfindungsgemäßen Kransteuerung umfassend eine Bedieneinheit 2, welche sich wie dargestellt in einer Arbeitsstellung befindet, wobei sich dabei die Bedieneinheit 2 zwischen einer Lenkvorrichtung 10 des Fahrzeugs 1 und einem Fahrersitz 9 befindet. Die Kransteuerung umfasst eine Lagervorrichtung 11 - hier in Form eines Schwenkhebels - für die Bedieneinheit 2, die verschwenkbar zu einer Montagevorrichtung 12 - hier in Form eines Lagerbolzens - angeordnet ist. Der hier dargestellte Bediener 8 kann anders als dargestellt eine Visualisierungseinheit 3 zur Visualisierung einer Arbeitsumgebung des Krans 5 tragen, wobei es sich bei der Visualisierungseinheit 3 um eine mobile Einheit handeln kann (z.B. Virtual-Reality-Brille), sodass sie unabhängig von der Bedieneinheit 2 bewegbar ist (vgl. Fig. 2).

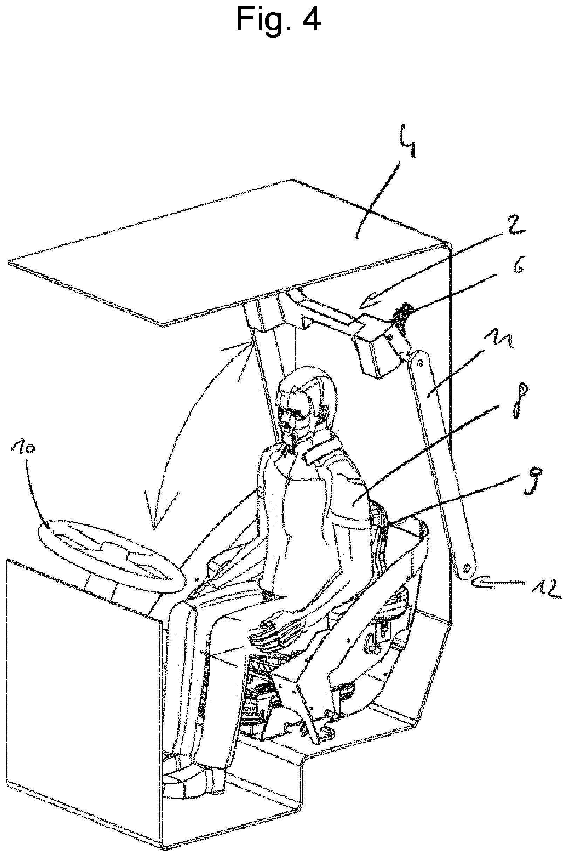

Fig. 4 zeigt eine weitere Ausführungsvariante einer Kransteuerung. In diesem Beispiel ist eine Bedieneinheit 2 in einer Lagerstellung gezeigt, in der die Bedieneinheit 2 oberhalb eines Fahrersitzes 9 des Fahrzeugs 1 angeordnet ist in welcher die Bedieneinheit 2 von einer Lenkvorrichtung 10 des Fahrzeugs 1 weg bewegt ist. Durch ein Verschwenken der Lagervorrichtung 11 kann die Bedieneinheit 2 in eine Arbeitsstellung gebracht werden, wobei sich dann die Bedieneinheit 2 zwischen der Lenkvorrichtung 10 des Fahrzeugs 1 und dem Fahrersitz 9 befindet.

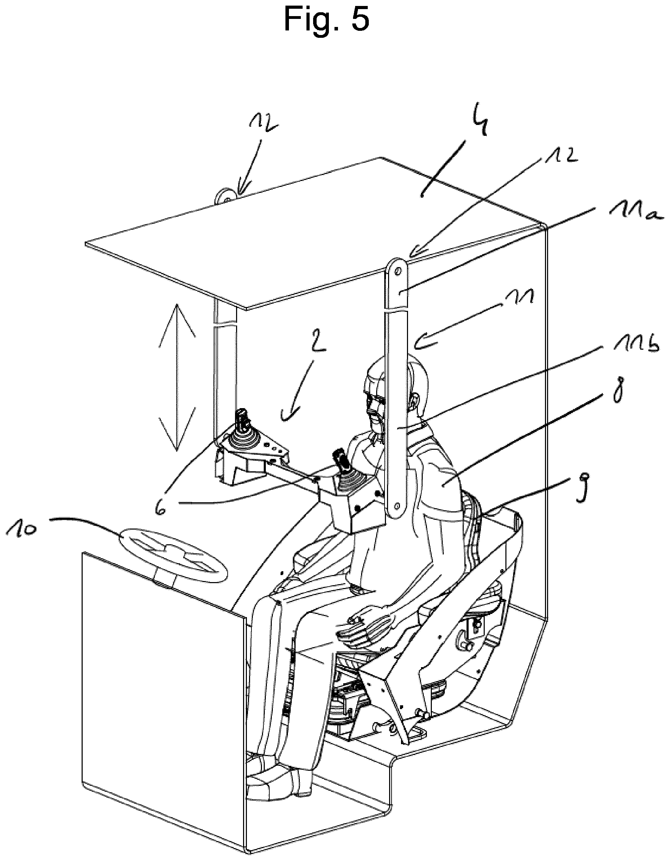

Fig. 5 zeigt eine weitere Ausführungsvariante einer Kransteuerung. In diesem Beispiel ist eine Bedieneinheit 2 in einer Position zwischen einer Lagerstellung und einer Arbeitsstellung gezeigt. Durch ein Verschieben der hier mit zwei relativ zueinander teleskopierbaren Teilen 11a, 11b ausgebildeten Lagervorrichtung 11 kann die Bedieneinheit 2 in die Arbeitsstellung oder die Lagerstellung gebracht werden. Die Lagervorrichtung 11 weist zwei relativ zueinander verfahrbare Teile 11a, 11b auf, von denen der eine Teil 11b die Bedieneinheit 2 lagert und die Montagevorrichtung 12 - hier in Form eines Lagerbolzens - am anderen Teil 11a angeordnet ist, wobei die begrenzte Bewegung der Bedieneinheit 2 zwischen der Arbeitsstellung und der Lagerstellung durch ein vorzugsweise lineares Verfahren der zwei relativ zueinander verfahrbaren Teile 11a, 11b erfolgt

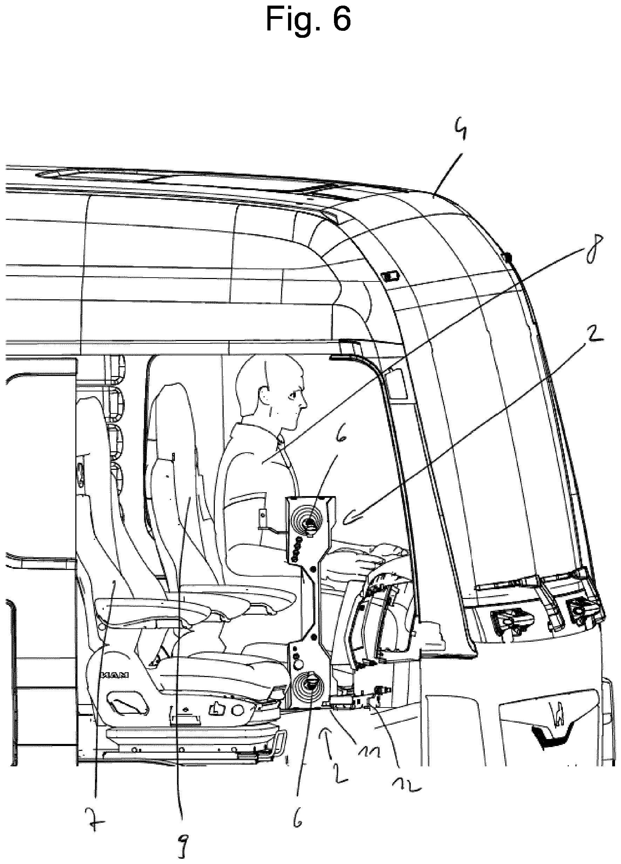

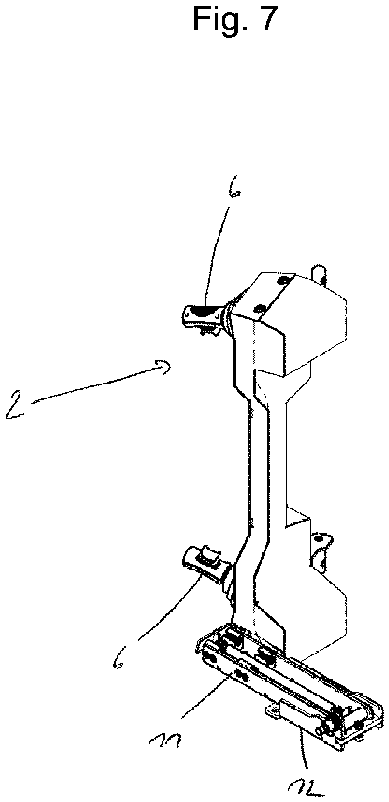

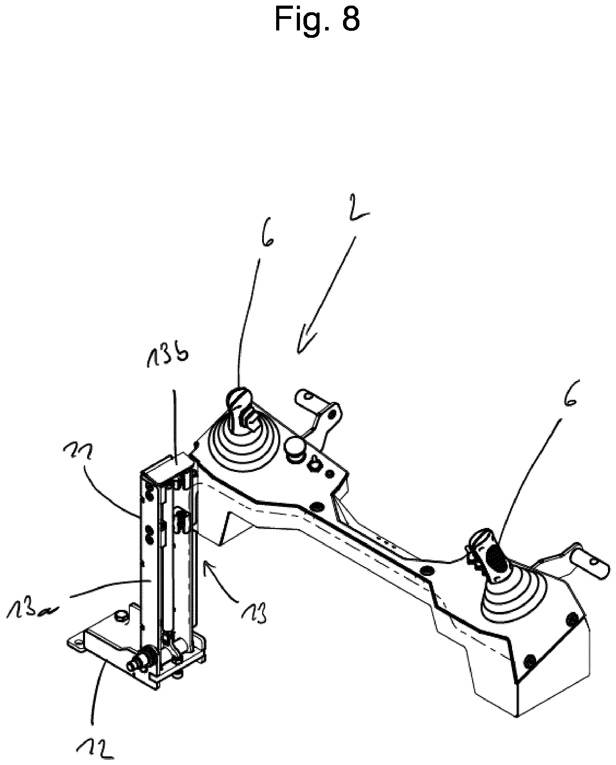

Fig. 6 zeigt eine weitere weitere Ausführungsvariante einer in einem Führerhaus 4 eines Fahrzeugs 1 angeordneten Kransteuerung. Im Führerhaus 4 befinden sich ein Fahrersitz 9 und ein Beifahrersitz 7. Ein Bediener 8 sitzt im Fahrersitz 9. Aus Gründen der Übersichtlichkeit ist hier die Lenkvorrichtung 10, die sich vor dem Bediener 8 befinden würde, nicht dargestellt. Gezeigt ist eine Bedieneinheit 2 in einer Lagerstellung, in der die Bedieneinheit 2 neben dem Fahrersitz 9 angeordnet ist. Die Lagervorrichtung 11 und die Montagevorrichtung 12 können gemäß der in den Figuren 7 und 8 gezeigten Ausführung ausgebildet sein.

Fig. 7 zeigt eine Bedieneinheit 2, die an einer Lagervorrichtung 11 gelagert ist, wobei sich die Lagervorrichtung 11 in einer Lagerstellung, in welcher die Bedieneinheit 2 von einer Lenkvorrichtung 10 eines Fahrzeugs 1 weg bewegt ist (siehe Fig. 6). Mittels einer Montagevorrichtung 12 kann die Bedieneinheit 2 in einer Führerkabine 4 des Fahrzeugs 1 - beispielsweise durch eine Verschraubung am Boden der Führerkabine 4 - montiert werden. Die Lagervorrichtung 11 ist relativ zur Montagevorrichtung 12 verschwenkbar an der Montagevorrichtung 12 angeordnet.

Fig. 8 zeigt die Lagervorrichtung 11 mit der daran gelagerten Bedieneinheit 2 der Fig. 7 in einer Arbeitsstellung. Die Lagervorrichtung 11 weist eine Verstellvorrichtung 13 zur Anpassung einer Position der Bedieneinheit 2 in der Arbeitsstellung relativ zu einem Bediener 8 auf. Die Verstellvorrichtung 13 weist zwei relativ zueinander verfahrbare Teile 13a, 13b auf, von denen der eine Teil 13b die Bedieneinheit 2 trägt und die Montagevorrichtung 12 am anderen Teil 13a angeordnet ist.

### Bezugszeichenliste:

- 1: Fahrzeug
- 2: Bedieneinheit
- 3: Visualisierungseinheit
- 4: Führerkabine
- 5: Kran
- 6: Joystick
- 7: Beifahrersitz
- 8: Bediener
- 9: Fahrersitz
- 10: Lenkvorrichtung
- 11: Lagervorrichtung
- 11a: Teil der Lagervorrichtung
- 11b: anderer Teil der Lagervorrichtung
- 12: Montagevorrichtung
- 13: Verstellvorrichtung
- 13a: Teil der Verstellvorrichtung
- 13b: anderer Teil der Verstellvorrichtung

## Patentansprüche

1. Fahrzeug (1) mit einem Kran (5) und einer Kransteuerung für den an dem Fahrzeug (1) angeordneten Kran (5), mit wenigstens einer durch einen Bediener (8) bedienbaren Bedieneinheit (2) zur Steuerung von Arbeitsfunktionen des Krans (5), wobei mittels der Bedieneinheit (2) Steuersignale an Aktuatoren des Krans (5) eingebbar sind, wobei eine Montagevorrichtung (12) zur Anbringung der Bedieneinheit (2) in einer Führerkabine (4) des Fahrzeugs (2) und eine Lagervorrichtung (11) für die Bedieneinheit (2) vorgesehen sind, welche die Bedieneinheit (2) mit der Montagevorrichtung (12) verbindet, wobei die Lagervorrichtung (11) für die Bedieneinheit (2) zwischen zumindest zwei Stellungen begrenzt bewegbar gelagert ist, von denen eine Stellung als Arbeitsstellung ausgebildet ist, **dadurch gekennzeichnet, dass** in dieser Arbeitsstellung sich die Bedieneinheit (2) zwischen einer Lenkvorrichtung (10) des Fahrzeugs (1) und einem Fahrersitz (9) befindet und von denen eine andere Stellung als Lagerstellung ausgebildet ist, in welcher die Bedieneinheit (2) von der Lenkvorrichtung (10) des Fahrzeugs (1) weg bewegt ist, wobei die Montagevorrichtung (12) der Kransteuerung in einer Führerkabine (4) des Fahrzeugs (1) montiert ist.

2. Fahrzeug nach Anspruch 1, wobei eine Visualisierungseinheit (3) zur Visualisierung einer Arbeitsumgebung des Krans (5) vorgesehen ist.

3. Fahrzeug nach dem vorangehenden Anspruch, wobei die Visualisierungseinheit (3) als mobile Einheit ausgebildet ist, sodass sie unabhängig von der Bedieneinheit (2) bewegbar ist und bevorzugt von einem Bediener (8) am Körper tragbar ist.

4. Fahrzeug nach wenigstens einem der vorangehenden Ansprüche, wobei die Lagervorrichtung (11) relativ zur Montagevorrichtung (12) verschwenkbar und/oder verschiebbar an der Montagevorrichtung (12) angeordnet ist.

5. Fahrzeug nach dem vorangehenden Anspruch, wobei die Lagervorrichtung (11) wenigstens zwei relativ zueinander verschwenkbare Teile aufweist, von denen der eine Teil die Bedieneinheit (2) lagert und die Montagevorrichtung (12) am anderen Teil angeordnet ist, wobei die begrenzte Bewegung der Bedieneinheit (2) zwischen der Arbeitsstellung und der Lagerstellung durch ein Verschwenken der zwei relativ zueinander verschwenkbaren Teile erfolgt.

6. Fahrzeug nach einem der zwei vorangehenden Ansprüche, wobei die Lagervorrichtung (11) wenigstens zwei relativ zueinander verfahrbare Teile (11a, 11b) aufweist, von denen der eine Teil (11b) die Bedieneinheit (2) lagert und die Montagevorrichtung (12) am anderen Teil (11a) angeordnet ist, wobei die begrenzte Bewegung der Bedieneinheit (2) zwischen der Arbeitsstellung und der Lagerstellung durch ein vorzugsweise lineares Verfahren der zwei relativ zueinander verfahrbaren Teile (11a, 11b) erfolgt.

7. Fahrzeug nach wenigstens einem der vorangehenden Ansprüche, wobei die Lagervorrichtung (11) eine Verstellvorrichtung (13) zur Anpassung einer Position der Bedieneinheit (2) in der Arbeitsstellung relativ zu einem Bediener (8) aufweist.

8. Fahrzeug nach wenigstens einem der vorangehenden Ansprüche, wobei in der Lagerstellung die Bedieneinheit (2) neben einem Fahrersitz (9) des Fahrzeugs (1) angeordnet ist.

9. Fahrzeug nach wenigstens einem der vorangehenden Ansprüche, wobei in der Lagerstellung die Bedieneinheit (2) oberhalb eines Fahrersitzes (9) des Fahrzeugs (1) angeordnet ist.

10. Fahrzeug nach wenigstens einem der vorangehenden Ansprüche, wobei in der Lagerstellung die Bedieneinheit (2) vor oder hinter einem Fahrersitz (9) des Fahrzeugs (1) angeordnet ist.

## Claims

1. Vehicle (1) comprising a crane (5) and a crane control for the crane (5) arranged on the vehicle (1), comprising at least one operating unit (2) operable by an operator (8) for controlling working functions of the crane (5), wherein control signals can be input to actuators of the crane (5) by means of the operating unit, wherein there is provided a mounting arrangement (12) for mounting the operating unit (2) in a driving cab (4) of the vehicle (2) and a support arrangement (11) for the operating unit (2), which connects the operating unit (2) to the mounting arrangement (12), wherein the support arrangement (11) for the operating unit (2) is supported limitedly moveably between at least two positions of which one position is in the form of a working position, **characterised in that** in this working position the operating unit (2) is between a steering arrangement (10) of the vehicle (1) and a driving seat (9) and of which another position is in the form of a storage position in which the operating unit (2) is moved away from the steering arrangement (10) of the vehicle (1), wherein the mounting arrangement (12) of the crane control is mounted in a driving cab (4) of the vehicle (1).

2. Vehicle according to claim 1 wherein there is provided a visualisation unit (3) for visualisation of a working environment of the crane (5).

3. Vehicle according to the preceding claim wherein the visualisation unit (3) is in the form of a mobile unit so that it is moveable independently of the operating unit (2) and is preferably wearable on the body by an operator (8).

4. Vehicle according to at least one of the preceding claims wherein the support arrangement (11) is arranged pivotably relative to the mounting arrangement (12) and/or displaceably on the mounting arrangement (12).

5. Vehicle according to the preceding claim wherein the support arrangement (11) has at least two parts which are pivotable relative to each other and of which the one part supports the operating unit (2) and the mounting arrangement (12) is arranged on the other part, where the limited movement of the operating unit (2) between the working position and the storage position is effected by a pivotal movement of the two parts which are pivotable relative to each other.

6. Vehicle according to one of the two preceding claims wherein the support arrangement (11) has at least two parts (11a, 11b) which are displaceable relative to each other and of which the one part (11b) supports the operating unit (2) and the mounting arrangement (12) is arranged on the other part (11a), wherein the limited movement of the operating unit (2) between the working position and the storage position is effected by a preferably linear displacement of the two parts (11a, 11b) which are displaceable relative to each other.

7. Vehicle according to at least one of the preceding claims wherein the support arrangement (11) has an adjustment device (13) for adaptation of a position of the operating unit (2) in the working position relative to an operator (8).

8. Vehicle according to at least one of the preceding claims wherein the operating unit (2) in the storage position is arranged beside a driving seat (9) of the vehicle (1).

9. Vehicle according to at least one of the preceding claims wherein the operating unit (2) in the storage position is arranged above a driving seat (9) of the vehicle (1).

10. Vehicle according to at least one of the preceding claims wherein the operating unit (2) in the storage position is arranged in front of or behind a driving seat (9) of the vehicle (1).

## Revendications

1. Véhicule (1) avec une grue (5) et une commande de grue pour la grue (5) disposée sur le véhicule (1), avec au moins une unité d'utilisation (2) manipulable par un utilisateur (8) pour commander des fonctions de travail de la grue (5), dans lequel au moyen de l'unité d'utilisation (2), des signaux de commande peuvent être introduits au niveau des actionneurs de la grue (5), dans lequel sont prévus un dispositif de montage (12) pour agencer l'unité d'utilisation (2) dans une cabine de conduite (4) du véhicule (2) et un dispositif d'appui (11) pour l'unité d'utilisation (2), lequel relie l'unité d'utilisation (2) au dispositif de montage (12), le dispositif d'appui (11) pour l'unité d'utilisation (2) étant logé de façon mobile et limitée entre au moins deux positions, dont une position est conçue comme position de travail, **caractérisé en ce que** dans cette position de travail, l'unité d'utilisation (2) se trouve entre un dispositif de direction (10) du véhicule (1) et un siège de conducteur (9) et dont une autre position est conçue comme position de repos, dans laquelle l'unité d'utilisation (2) est déplacée à distance du dispositif de direction (10) du véhicule (1), dans lequel le dispositif de montage (12) de la commande de grue est monté dans une cabine de conduite (4) du véhicule (1).

2. Véhicule selon la revendication 1, dans lequel est prévue une unité de visualisation (3) pour visualiser un environnement de travail de la grue (5).

3. Véhicule selon la revendication précédente, dans lequel l'unité de visualisation (3) est conçue comme une unité mobile de sorte qu'elle est mobile indépendamment de l'unité d'utilisation (2) et peut être portée, de préférence, sur le corps par un utilisateur (8).

4. Véhicule selon au moins l'une des revendications précédentes, dans lequel le dispositif d'appui (11) est disposé de façon pivotante par rapport au dispositif de montage (12) et/ou déplaçable sur le dispositif de montage (12).

5. Véhicule selon la revendication précédente, dans lequel le dispositif d'appui (11) présente au moins deux parties pivotantes l'une par rapport à l'autre, dont une partie loge l'unité d'utilisation (2) et le dispositif de montage (12) est disposé sur l'autre partie, dans lequel le mouvement limité de l'unité d'utilisation (2) entre la position de travail et la position de repos se produit par un pivotement des deux parties pouvant pivoter l'une par rapport à l'autre.

6. Véhicule selon l'une des les deux revendications précédentes, dans lequel le dispositif d'appui (11) présente au moins deux parties (11a, 11b) déplaçables l'une par rapport à l'autre, dont la partie (11b) loge l'unité d'utilisation (2) et le dispositif de montage (12) est disposé sur l'autre partie (11a), dans lequel le mouvement limité de l'unité d'utilisation (2) se produit entre la position de travail et la position de repos par un déplacement de préférence linéaire des deux parties (11a, 11b) déplaçables l'une par rapport à l'autre.

7. Véhicule selon au moins l'une des revendications précédentes, dans lequel le dispositif d'appui (11) présente un dispositif de réglage (13) pour adapter une position de l'unité d'utilisation (2) dans la position de travail par rapport à un utilisateur (8).

8. Véhicule selon au moins l'une des revendications précédentes, dans lequel dans la position de repos, l'unité d'utilisation (2) est disposée à côté d'un siège de conducteur (9) du véhicule (1).

9. Véhicule selon au moins l'une des revendications précédentes, dans lequel dans la position de repos, l'unité d'utilisation (2) est disposée au-dessus d'un siège de conducteur (9) du véhicule (1).

10. Véhicule selon au moins l'une des revendications précédentes, dans lequel dans la position de repos, l'unité d'utilisation (2) est disposée devant ou derrière un siège de conducteur (9) du véhicule (1).
